# EUROPEAN PATENT APPLICATION

(11) **EP 4 793 314 A1**
(43) Date of publication of application: **19.08.2026**
(21) Application number: 25158426.4
(22) Date of filing: 17.02.2025
(51) Int. Cl.: C08L 23/10, C08L 23/14

(54) **TRANSPARENT POLYPROPYLENE COMPOSITION**

(71) Applicant: Basell Poliolefine Italia S.r.l., 20121 Milano (IT)
(72) Inventor: HEES, Timo, 65926 Frankfurt/M. (DE); CAVALIERI, Claudio, 44122 Ferrara (IT)
(74) Representative: LyondellBasell

(57) **Abstract**

A polypropylene composition comprising:
A) from 31 wt% to 69 wt% of a recycled polypropylene component;
B) from 31 wt% to 69 wt% of a propylene ethylene copolymer having:
the ethylene derived units content, measured by ¹³C-NMR, ranging from 1.8 wt% to 6.1 wt%.

## Description

### FIELD OF THE INVENTION

The present disclosure relates to polypropylene compositions containing recycled material that can be used in preparation of blow molded articles.

### BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow molded bottles and injection molded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

Recycled PP derived from post-consumer or post-industrial waste often cannot be directly used for small blow molding applications by lack of mechanical properties, required MFR range or impurities.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a heterophasic polypropylene composition having flexural modulus equal to or lower than 600 MPa as a compatibilizer agent for a recycled polypropylene composition. In both cases, the effect of the compatibilizer was that of improving the mechanical properties while the optical properties had not been tested. In fact, improving the optical properties of polypropylene composition including substantial amounts of recycled material is a demanding task because the multiplicity of components chemically different to each other makes certain optical properties such as transparency difficult to be achieved at a satisfactory extent..

The recycled plastic polyolefin derives from streams of post-consumer waste (PCW) or post-industrial waste (PIW).

Polymer compositions including recycled materials are perceived of being affected by lower reliability and lower performances with respect to the compositions made of solely virgin polymers. Furthermore usually polymer compositions including recycled materials have poorer optical properties and a poor transparency and it would be desirable to improve these properties.

It has now been unexpectedly found that it is possible to have an improved property profile especially in terms of haze when a recycled polymer is added to a virgin polypropylene in order to obtain a composition that can be used for blow molding application especially for obtaining small blow molded object.

### SUMMARY OF THE INVENTION

Thus an object of the present disclosure is a polypropylene composition comprising:
A) from 31 wt% to 69 wt%; preferably from 41 wt% to 59 wt%, more preferably from 45 wt% to 55 wt% of a recycled polypropylene composition having:
   i) ethylene derived units content, measured by ¹³C-NMR, ranging from 1.0 wt% to 4.2 wt%, preferably ranging from 1.4 wt% to 4.0 wt%, more preferably ranging from 1.6 wt% to 3.8 wt%;
   ii) 1-butene derived units content, measured by ¹³C-NMR, ranging from 1.5 wt% to 5.2 wt% , preferably ranging from 1.8 wt% to 5.0 wt%, more preferably ranging from 2.1 wt% to 4.8 wt%;
   iii) ethylene derived units content of the fraction soluble in xylene at 25°C, measured by ¹³C-NMR, ranging from 6.0 wt% to 15.0 wt%, preferably ranging from 6.4 wt% to 14.3 wt%, more preferably ranging from 7.0 wt% to 13.4 wt%;
   iv) 1-butene derived units content, of the fraction soluble in xylene at 25°C, measured by ¹³C-NMR, ranging from 2.8 wt% to 8.2 wt%, preferably ranging from 3.0 wt% to 7.8 wt%, more preferably ranging from 3.2 wt% to 7.2 wt%;
   v) Melt Flow Rate, determined according to the method ISO 1133 (230° C, 2.16 kg), ranging from 5.0 g/10 min to 20.0 g/10 min; preferably from 7.0 g/10 min to 18.0 g/10 min, more preferably from 9.0 g/10 min to 16.5 g/10 min;
   vi) Xylene Soluble fraction at 25°C ranging from 4.8 wt% to 10.7 wt%, preferably ranging from 5.3 wt% to 9.8 wt%, more preferably ranging from 6.2 wt% to 9.2 wt%;
   vii) melting point measured by DSC according to ISO 11357-3, ranging from 135 °C to 149°C; preferably from 138°C to 148°C; more preferably from 140°C to 145°C;
(B) from 31 wt% to 69 wt%; preferably from 41 wt% to 59 wt%, more preferably from 45 wt% to 55 wt% of a propylene ethylene copolymer having:
   i) ethylene derived units content, measured by ¹³C-NMR, ranging from 1.8 wt% to 6.1 wt%, preferably ranging from 2.5 wt% to 5.5 wt%, more preferably ranging from 2.8 wt% to 5.3 wt%
   ii) a Melt Flow Rate, determined according to the method ISO 1133 (230° C, 5.0 kg), ranging from 0.3 g/10 min to 2.8 g/10 min; preferably from 0.7 g/10 min to 2.5 g/10 min; more preferably from 0.9 g/10 min to 2.2 g/10 min;
   iii) a Xylene Soluble fraction at 25°C, determined according to ISO 16152: 2005, ranging from 4.5 wt% to 12.5 wt%; preferably from 6.2 wt% to 11.1 wt%; more preferably from 6.9 wt% to 10.3 wt%;

wherein the Melt Flow Rate of the polypropylene composition, determined according to ISO 1133 (230° C, 2.16 kg), ranges from 0.7 g/10 min to 6.0 g/10 min; preferably from 1.20 g/10 min to 3.2 g/10 min, more preferably from 1.5 g/10 min to 2.9 g/10 min;
the sum of the amounts of (A) and (B) being referred to the total weight of (A) and (B) is 100.

### DETAILED DESCRIPTION OF THE INVENTION

The recycled polypropylene composition A) can be a Post-Industrial Resin (PIR) or a Post-Consumer Resin (PCR).

Post-industrial waste (PIW) is a material diverted from the waste stream originating from a manufacturing process.

Post-industrial resin (PIR) refers to a plastic material originating from the mechanical recycling of a post-industrial waste (PIW).

Post-Consumer Resin (PCR) defined as recycled derived from an end product that has completed its life cycle as a consumer item and would otherwise be disposed of as waste.

Preferably the recycled polypropylene composition component A) does not contain limonene.

Preferably the recycled polypropylene composition component A) contains a organic compound with a chemical structure based on isoquinoline, that serves as a dye, e.g. red.

Preferably the recycled polypropylene composition component A) has at least one of the following features:
i) Tensile modulus, measured according to ISO 527-2, ranging between 700 MPa and 1200 MPa, preferably between 750 MPa and 1150 MPa; more preferably between 820 MPa and 1050 MPa;
ii) Charpy notched impact strength at 23°C, measured according to ISO 179-1eA, and ISO 1873-2, ranging from 3.0 kJ/m² to 9.0 kJ/m², more preferably ranging from 3.8 kJ/m² to 8.5 kJ/m^{2:} more preferably ranging from 4.8 kJ/m² to 8.0 kJ/m² ;
iii) Charpy notched impact strength at 0°C, measured according to ISO 179-1eA, and ISO 1873-2, ranges from 1.3 kJ/m² to 3.3 kJ/m², preferably between from 1.5 kJ/m² to 3.0 kJ/m², more preferably between from 1.6 kJ/m² to 2.5 kJ/m²;
iv) Elongation at break, measured according to ISO 527, ranging from 400 % to 800 %; preferably from 500 % to 750 %, more preferably from 550 % to 700 %.

Preferably the propylene ethylene copolymer component B) has one or more of these features:
i) the melting temperature, measured according to ISO 11357-3, at scanning rate of 20C/min, ranges from 132° C to 155°, preferably from 135°C to 148°C, more preferably from, 138°C to 144°C;
ii) tensile modulus, determined according to ISO 527-2, ranging from 300 Mpa to 1150 MPa, preferably from 650 MPa to 1050 MPa; more preferably from 750 MPa to 950 Mpa,
iii) Elongation at break, measured according to ISO 527 ranging from 250 % to 650 %; preferably from 300 % to 620 %, more preferably from 320 % to 550 %.,
iv) Charpy notched impact strength at 23°C, measured according to ISO 179-1eA, and ISO 1873-2, ranging from 28.0 kJ/m² to 60.0 kJ/m², more preferably ranging from 32.0 kJ/m² to 55.0 kJ/m^{2:} more preferably ranging from 37.5 kJ/m² to 49.6 kJ/m² ;
v) Charpy notched impact strength at 0°C, measured according to ISO 179-1eA, and ISO 1873-2, ranges from 5.3 kJ/m² to 12.3 kJ/m², preferably between from 6.5 kJ/m² to 11.3 kJ/m², more preferably between from 7.2 kJ/m² to 10.2 kJ/m².

The polypropylene composition according to the present disclosure preferably has a Tensile modulus, measured according to ISO 527-2, ranging between 700 MPa and 1800 MPa, preferably between 780 MPa and 1500 MPa; more preferably between 850 MPa and 1200 MPa.

The polypropylene composition preferably has a Charpy notched impact strength at 23°C, determined according to ISO 179-1eA, and ISO 1873-2, ranging from 8.0 kJ/m² to 16.0 kJ/m², more preferably ranging from 8.5 kJ/m² to 15.0 kJ/m^{2:} more preferably ranging from 9.2 kJ/m² to 14.5 kJ/m². The Charpy impact strength at 0°C, determined according to ISO 179-1eA, and ISO 1873-2, ranges from 0.5 kJ/m² to 3.8 kJ/m², preferably between from 1.3 kJ/m² to 3.5 kJ/m², more preferably between from 1.5 kJ/m² to 3.2 kJ/m².

The polypropylene composition preferably has the elongation at break, measured according to ISO 527, ranges from 400 % to 1200 %; preferably from 450 % to 1100 %; more preferably from 500 % to 1000%.

The polypropylene composition preferably has an haze, measured as disclosed in the example section, ranging from 10 % to 28 %; preferably from 13% to 25%; more preferably from 17% to 23%.

With the polypropylene composition according to the present disclosure is possible in particular to achieve a material having very low haze and an improved elongation at break, to be used for blow molding.

The term "copolymer" as used herein refers to polymers with two different recurring units in the chain. By "ambient temperature" and "room temperature" is meant a temperature of 25 °C.

By the term "crystalline polypropylene" is meant in the present application a propylene polymer having an amount of isotactic pentads (mmmm), measured by ¹³C-MNR on the fraction insoluble in xylene at 25° C, higher than 70 molar %; by "elastomeric" polymer is meant a polymer having solubility in xylene at ambient temperature higher than 50 wt%.

Component B) can be obtained by polymerizing propylene in presence of ethylene, with processes commonly known in the art. Component B for example can be commercially available such as Hostalen H5416 sold by Lyondellbasell.

Component B) can be prepared by polymerizing propylene in the presence of ethylene and of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:
   (R⁷)ₐ(R⁸)_{b}Si(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25 wt%.

The amount of Ti may range from 0.5 to 7% and more preferably from 0.7 to 5wt. %.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et3Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R⁹ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The final composition comprising the components (A) and (B) may be added with additives, fillers and pigments, commonly used in olefin polymers such as nucleating agents, extension oils, mineral fillers, clarifiers and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The following examples are given in order to illustrate, but not limit the present disclosure.

### EXAMPLE

### Characterization methods

**Melting temperature and crystallization temperature:** The melting point has been measured by using a differential scanning calorimetry (DSC) instrument according to ISO 11357-3, at scanning rate of 20 °C/min both in cooling and heating, on a sample of weight between 5 and 7 mg, under inert N2 flow. Instrument calibration made with Indium.

**Melt Flow Rate:** Determined according to the method ISO 1133-1 (230° C, 2.16 kg) or (230° C, 5.0 kg).

**Xylene-soluble fraction (XS) at 25°C:** Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.):** The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

### Determination of the composition of PP repro via 1H and 13C NMR

PP repro is a mixture of polymers having an aliphatic hydrocarbon backbone (ethylene - E), propylene - P), and 1-butene (B, < 1.0 wt%), 1-hexene (H, < 1.0 wt%) and 1-octene (O, < 1.0 wt%) copolymers and possibly an aromatic hydrocarbon backbone (polystyrene and polyethylene terephthalate). Due to analytical complications in determining the composition of aromatic containing polymers via ¹³C NMR spectroscopy, the method was developed by using the combination of the results obtained via ¹H and ¹³C NMR spectra. In particular ¹³C NMR was used to determine the relative amount of ethylene, propylene 1-butene, 1-hexene and 1-octene copolymers, while ¹H NMR provided a quantification of the composition of aliphatic and aromatic components and the relative amounts of polystyrene and polyethylene terephthalate when present.

¹³C NMR and ¹H spectra were acquired on a Bruker AV600 spectrometer equipped with cryo probe, operating at 150.91 MHz and 600.13 MHz respectively in the Fourier transform mode at 120 °C.

### About 30 mg of sample were dissolved at 120°C in 0.5 ml of 1,1,2,2 tetrachloroethane-d2 added with 0.1 mg/ml of Irganox 1010 (AO 1010) as antioxidant

For ¹³C NMR spectra the peak of the S_{δδ} carbon (nomenclature according C.J. Carman, R.A. Harrington and C.E. Wilkes, Macromolecules, 10, 3, 536 (1977)) was used as internal reference at 29.9 ppm. Each spectrum was acquired with a 90 ° pulse, 15 seconds of delay between pulses and CPD to remove 1H-13C coupling. 512 transients were stored in 65 K data points using a spectral window of 9000 Hz.

For ¹H NMR spectra the peak of the residual C2DHCl4 at 5.95 ppm was used as internal reference. Each spectrum was acquired with a 90° pulse, 5 seconds of delay between pulses and 128 transients stored in 64K data points using a spectral window of 9600 Hz.

### Evaluation of 13C NMR spectrum of Ethylene, Propylene, 1-Butene, 1-Hexene and 1-Octene copolymers

In the ¹³C NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in ¹³C NMR spectrum (possible overlaps of the peaks of the antioxidant AO1010 were taken into account), using the following relations: $PPP = 100 {I}_{11} / Σ$ $for {I}_{3} / {I}_{4} < 1 : PPE = 100 {I}_{3} / Σ$ $for {I}_{3} / {I}_{4} > 1 : PPE = 100 \left({I}_{8}-6{I}_{4}\right) / Σ$ $EPE = 100 {I}_{7} / Σ$ $EBE = 100 {I}_{1} / Σ$ $EHE = 100 {I}_{6} / Σ$ $EOE = 100 \left({I}_{2}-{I}_{6}\right) / Σ$ $XEX = 100 {I}_{13} / Σ$ $XEE = 100 \left({I}_{12}-{I}_{2}\right) / Σ$ $EEE = 100 \left(0.5 \left({I}_{10}-{I}_{2}\right)+0.25 \left({I}_{9}+{I}_{8}\right)\right) / Σ$

Where: $Σ = {I}_{11} + \left({I}_{3} or \left({I}_{8}-6{I}_{4}\right)\right) + {I}_{7} + {I}_{1} + {I}_{6} + {I}_{2} - {I}_{6} + {I}_{13} + {I}_{12} - {I}_{2} + 0.5 \left({I}_{10}-{I}_{2}\right) + 0.25 \left({I}_{9}+{I}_{8}\right)$
and Iₙ are the areas of the corresponding carbon following the numbering scheme reported in Table 1 and X can be propylene, 1-butene , 1-hexene or 1-octene

The molar content of Ethylene, Propylene, 1-Butene and 1-Octene is obtained from triads using the following relations: $P \left(m%\right) = PPP + PPE + EPE$ $B \left(m%\right) = EBE$ $H \left(m%\right) = EHE$ $O \left(m%\right) = EOE$ $E \left(m%\right) = EEE + XEE + XEX$

Molar content was transformed in weight using monomers molecular weight.

### Evaluation of 1H NMR spectrum

The molar content of Polyethylene terephthalate (PET), Polystyrene (PS) and ethylene/propylene/1-butene/1-hexene/1-octene copolymers were obtained from ¹H spectra.

The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations: $PET = 100 0.25 {I}_{a} / Σ$ $PS = 100 0.5 {I}_{c} / Σ$ $Total aliphatic E / P / B / H / O copolymers = 100 0.5 \left({I}_{e}-3PS-9{I}_{d}\right) / Σ$
Where Σ = 0.25 Iₐ+ 0.5 I_{c} + 0.5 (Iₑ - 3PS-9I_{d})

Molar content was transformed in weight percentage using monomers molecular weight considering the MW of CH₂ to estimate the weight contribution from ethylene/propylene/1-butene/1-hexene/1-octene copolymers.

The weight content of P, E, B, H and O obtained from ¹³C spectrum was rescaled to obtain the weight percentage in the whole sample by multiplying each value (wt%) from triads with the rescaling factor "RF":

RF = [100-PET(wt%)-PS(wt%)]/100 where PET(wt%) and PS(wt%) are the compositions obtained from ¹H spectrum.

**Table A - Assignments of the ¹³C NMR spectrum of Ethylene/Propylene/1-Octene/1-Butene copolymers**

| Number | Chemical Shift (ppm) | Carbon | Sequence |
|---|---|---|---|
| 1 | 39.6 | T_{δδ} | EBE |
| 2 | 38.8 | T_{δδ} | EOE + EHE |
| 3 | 38.2 - 37.6 | S_{αγ} | PE |
| 4 | 36.2 | CH₂ | AO1010 |
| 6 | 34.0 | 4B₄ | EHE |
| 7 | 33.3 - 33.2 | T_{δδ} | EPE |
| 8 | 30.8 - 30.7 | T_{βδ} | PPE |
| 8 | 30.3 | S_{γδ} | XEEE |
| 9 | 30.2 | S_{γδ} | PEEE |
| 10 | 29.9 | S_{δδ +} 4B₆ | EEE + O |
| 11 | 28.8 - 28.2 | T_{ββ} | PPP |
| 12 | 27.4 - 26.7 | S_{βδ} + 5B₆ | XE + O |
| 13 | 24.7 - 24.1 | S_{ββ} | XEX |

**Table B - Assignments of the ¹H NMR spectrum of Ethylene/Propylene/1-Butene/1-Hexene/1-Octene copolymers containing PS and PET**

| Number | Chemical Shift (ppm) | Proton | Sequence |
|---|---|---|---|
| A | 8.08 | CH | PET |
| B | 7.20 - 6.81 | CH | PS |
| C | 6.81 - 6.33 | CH | PS |
| D | 2.91 | CH₂ | AO1010 |
| e | 1.80 - 0.70 | CH + CH₂ + CH3 | Total aliphatic |
| | 1.25 | CH + CH₂ | PS |

### Ethylene (C2) content

### ¹³C NMR of propylene/ethylene copolymers

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations: $PPP = 100 {T}_{ββ} / S PPE = 100 {T}_{βδ} / S EPE = 100 {T}_{δδ} / S$ $PEP = 100 {S}_{ββ} / S PEE = 100 {S}_{βδ} / S EEE = 100 \left(0.25 {S}_{γδ}+0.5 {S}_{δδ}\right) / S$ $S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:
E% mol = 100 * [PEP+PEE+EEE]The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$ The tacticity of Propylene sequences was calculated as mm content from the ratio of the PPP mmTββ (28.90-29.65 ppm) and the whole Tββ (29.80-28.37 ppm).
**Samples for the mechanical** tests have been obtained according to ISO 1873-2:2007.
**Charpy notched impact:** determined according to ISO 179-1eA, and ISO 1873-2
**Elongation at yield:** measured according to ISO 527.
**Elongation at break:** measured according to ISO 527
**Stress at break:** measured according to ISO 527.
**Flexural Modulus** Determined according to ISO 178
**Haze (on 1 mm plaque)**
According to the method used, 5x5 cm specimens are cut out from molded plaques of 1 mm thickness and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.
75x75x1 mm plaques are molded with a GBF Plastinjector G235190 Injection
Molding Machine, 90 tons under the following processing conditions:
Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Tensile Modulus** measured according to ISO 527-2.

### Component A)

Component A) is a PCR derived from protective packaging waste and contains 2,9-bis(3,5-dimethylphenyl)anthra[2,1,9-def:6,5,10-d'e'f']diisoquinoline-1,3,8,10(2H,9H)-tetrone having the features reported in Table 1.

**Table 1**

| | | **A1** |
|---|---|---|
| MFR 2.16 kg/230°C | g/10' | 14.6 |
| Density | kg/dm3 | 0.900 |
| XS | % | 7.50 |
| Tm | °C | 142.7 |
| Tc | °C | 108.6 |
| C2 (NMR) | wt% | 1.90 |
| C4 (NMR) | wt% | 4.70 |
| C2-(XS fraction) (NMR) | wt% | 7.57 |
| C4-(XS fraction) (NMR) | wt% | 6.57 |
| Tensile Modulus | N/mm² | 915 |
| Charpy Impact @ 23°C | kJ/m² | 7.2 |
| Charpy Impact @ 0°C | kJ/m² | 2.3 |
| Elongation at break | % | 640 |

### Component B

Component B is a commercial propylene ethylene copolymer sold by Lyondellbasell under the tradename of Hostalen H5416. The features of the components are reported in Table 2.

**Table 2**

| | | |
|---|---|---|
| MFR 5 Kg/230°C | g/10min | 1.3 |
| Ethylene derived units | wt% | 4.0 |
| Polydispersity (PI) | | 4.9 |
| X.S. | % | 8.7 |

| ISO Characterization | | |
|---|---|---|
| Charpy Impact @ 23°C | kJ/m2 | 41.1 |
| Charpy Impact @ 0°C | kJ/m2 | 8.0 |
| Tensile modulus 24h | MPa | 850 |
| Elongation at break | kJ/m2 | 482 |
| Tm | °C | 140.0 |

### Example 1

50 wt% of Component A has been blended with 50 wt% of component B. The features of the composition of examples are reported in table 4

**Table 4**

| Variable Name | | Comp ex 1 | Comp ex 2 | ex 3 |
|---|---|---|---|---|
| Component A | wt% | 100 | - | 50 |
| Component B | Wt% | - | 100 | 50 |
| MFR 2.16 Kg/230°C | g/10min | 14.6 | 0.3 | 1.96 |
| Tm | deg_C | 142.7 | 140.4 | 144.5 |
| Charpy Impact @ 23°C | KJ/m^2 | 5.2 | 41.1 | 11.4 |
| Charpy Impact @ 0°C | KJ/M2 | 1.8 | 8.0 | 2.1 |
| Tensile Modulus | N/MM2 | 915 | 850 | 960 |
| Elongation at break | % | 595 | 480 | 610 |
| Haze | % | 98 | nm | 20 |

| | | | | |
|---|---|---|---|---|
| Nm= not measured | | | | |

Haze of example 3 is lower than that one of comparative example 1, tensile modulus and elongation at break are higher in example 3 with respect to comparative examples.

## Claims

1. A polypropylene composition comprising:
A) from 31 wt% to 69 wt% of a recycled polypropylene composition having:
i) ethylene derived units content, measured by ¹³C-NMR, ranging from 1.0 wt% to 4.2 wt%;
ii) 1-butene derived units content, measured by ¹³C-NMR, ranging from 1.5 wt% to 5.2 wt%;
iii) ethylene derived units content of the fraction soluble in xylene at 25°C, measured by ¹³C-NMR, ranging from 6.0 wt% to 15.0 wt%;
iv) 1-butene derived units content, of the fraction soluble in xylene at 25°C, measured by ¹³C-NMR, ranging from 2.8 wt% to 8.2 wt%;
v) Melt Flow Rate, determined according to the method ISO 1133 (230° C, 2.16 kg), ranging from 5.0 g/10 min to 20.0 g/10 min;
vi) Xylene Soluble fraction at 25°C ranging from 4.8 wt% to 10.7 wt%;
vii) melting point measured by DSC according to ISO 11357-3, ranging from 135 °C to 149°C;
(B) from 31 wt% to 69 wt%; of a propylene ethylene copolymer having:
i) ethylene derived units content, measured by ¹³C-NMR, ranging from 1.8 wt% to 6.1 wt%,
ii) a Melt Flow Rate, determined according to the method ISO 1133 (230° C, 5.0 kg), ranging from 0.3 g/10 min to 2.8 g/10 min;
iii) a Xylene Soluble fraction at 25°C, determined according to ISO 16152: 2005, ranging from 4.5 wt% to 12.5 wt%;
wherein the Melt Flow Rate of the polypropylene composition, determined according to ISO 1133 (230° C, 2.16 kg), ranges from 0.7 g/10 min to 6.0 g/10 min;
the sum of the amounts of (A) and (B) being referred to the total weight of (A) and (B) is 100.

2. The polypropylene composition according to claim 1 wherein:
component (A) ranges from 41 wt% to 59 wt%;
component (B) ranges from 59 wt% to 41 wt%.

3. The polypropylene composition according to anyone of claims 1-2 wherein component A) has ethylene derived units content, measured by ¹³C-NMR, ranging from 1.4 wt% to 4.0 wt%.

4. The polypropylene composition according to anyone of claims 1-3 wherein component A) has 1-butene derived units content, measured by ¹³C-NMR, ranging from 1.8 wt% to 5.0 wt%.

5. The polypropylene composition according to anyone of claims 1-4 wherein component (A) has the ethylene derived units content of the fraction soluble in xylene at 25°C, measured by ¹³C-NMR, ranging from 6.4 wt% to 14.3 wt%.

6. The polypropylene composition according to anyone of claims 1-5 wherein component (A) has 1-butene derived units content, of the fraction soluble in xylene at 25°C, measured by ¹³C-NMR, ranging from 3.0 wt% to 7.8 wt%.

7. The polypropylene composition according to anyone of claims 1-6 wherein component (B) has a Melt Flow Rate, determined according to the method ISO 1133 (230° C, 2.16 kg), ranging from 0.7 g/10 min to 2.5 g/10 min.

8. The polypropylene composition according to anyone of claims 1-7 wherein component (B) has the ethylene derived units content, measured by ¹³C-NMR, ranging from 2.5 wt% to 5.5 wt%.

9. The polypropylene composition according to anyone of claims 1-8 wherein component (B) has a Xylene Soluble fraction at 25°C, determined according to ISO 16152: 2005, ranging from 6.2 wt% to 11.1 wt%.

10. The polypropylene composition according to anyone of claims 1-9 wherein: component (A) ranges from 45 wt% to 55 wt%; component (B) ranges from 45 wt% to 55 wt%.

11. The polypropylene composition according to anyone of claims 1-10 wherein: The polypropylene composition according to anyone of claims 1-8 wherein component (B) has a Xylene Soluble fraction at 25°C, determined according to ISO 16152: 2005, ranging from 6.9 wt% to 10.3 wt%.

12. The polypropylene composition according to anyone of claims 1-11 wherein in component A) the Xylene Soluble fraction at 25°C ranges from 6.2 wt% to 9.2 wt%.

13. The polypropylene composition according to anyone of claims 1-12 wherein in component A) melting point measured by DSC according to ISO 11357-3, ranges from 138°C to 148°C.

14. The polypropylene composition according to anyone of claim 1-13 wherein component A) contains: 2,9-bis(3,5-dimethylphenyl)anthra[2,1,9-def:6,5,10-d'e'f']diisoquinoline-1,3,8,10(2H,9H)-tetrone.

15. A blow molded article made from polypropylene composition according to claims 1-14.
